# EUROPEAN PATENT SPECIFICATION

(11) **EP 2 878 158 B1**
(45) Date of publication and mention of the grant of the patent: **21.04.2021**
(21) Application number: 13823297.0
(22) Date of filing: 25.07.2013
(51) Int. Cl.: H04W 8/18, H04W 48/08, H04W 28/02, H04L 12/803, H04L 12/54, H04W 48/18

(54) **METHOD AND APPARATUS FOR TRAFFIC OFFLOADING BASED ON CONGESTION IN WIRELESS COMMUNICATION SYSTEM**
VERFAHREN UND VORRICHTUNG FÜR VERKEHRSENTLADUNG JE NACH ÜBERLASTUNG IN EINEM DRAHTLOSEN KOMMUNIKATIONSSYSTEM
PROCÉDÉ ET APPAREIL DE DÉLESTAGE DE TRAFIC BASÉ SUR L'ENCOMBREMENT DANS UN SYSTÈME DE COMMUNICATIONS SANS FIL

(30) Priority: 25.07.2012 KR 20120080993; 25.02.2013 KR 20130019880; 08.03.2013 KR 20130025058
(43) Date of publication of application: 03.06.2015
(73) Proprietor: Samsung Electronics Co., Ltd., Suwon-si, Gyeonggi-do 443-742 (KR)
(72) Inventor: JEONG, Sangsoo, Suwon-si Gyeonggi-do 442-082 (KR); CHO, Songyean, Seoul 156-011 (KR); SON, Jungje, Yongin-si Gyeonggi-do 446-916 (KR); BAE, Beomsik, Suwon-si Gyeonggi-do 443-400 (KR); LIM, Hanna, Seoul 133-100 (KR)
(74) Representative: HGF
(86) International application number: PCT/KR2013/006686
(87) International publication number: WO 2014/017855

(56) References cited:
- WO-A2-2011/082035
- US-A1- 2011 058 479
- US-A1- 2011 075 675
- US-A1- 2011 170 469
- US-A1- 2011 306 386
- US-A1- 2011 306 386
- US-A1- 2012 140 651

## Description

### Technical Field

The present disclosure relates to a method and apparatus for traffic offloading based on congestion in a wireless communication system. More particularly, the present disclosure relates to a method and apparatus that enable a user equipment to select and use a most appropriate Access Network (AN) in a wireless communication system including heterogeneous networks in consideration of signal strengths and congestion states of ANs.

### Background Art

Typical mobile communication systems have been developed to provide voice services while guaranteeing user mobility. Such mobile communication systems have gradually expanded coverage from voice services, to data services, and further to high- speed data services. However, as current mobile communication systems suffer resource shortages and users demand increasingly higher-speed services, development of more advanced mobile communication systems is needed.

To this end, the 3GPP (3rd Generation Partnership Project) has developed specifications for Long Term Evolution (LTE) as a next generation mobile communication system. LTE is based on high-speed packet-based communication technology supporting a maximum data transfer rate of about 100 Mbps. To achieve such a data transfer rate, various approaches have been considered, such as reducing the number of nodes on a communication path through simplification of the network architecture and bringing wireless protocols as close as possible to wireless channels.

In such a mobile communication system, a user equipment may simultaneously use multiple heterogeneous networks. The network to be used to transfer user traffic is determined according to a preset policy.

Patent document US2011/0306386 A1 discloses a system, method and mobile device for using a policy defined by a network operator to control the interfaces on which data is sent and received by a mobile device. Among other features, it discloses that interface selection policies may be sent from a policy server (PCRF) to a mobile device, where the policies define rules that are used to determine an interface (e.g. Wi-Fi or cellular) over which different types of data should be sent (paragraph [96] to [100]). The determination of the policies appears to take place at a network-based policy server and may be based upon network conditions reported to the network by the UE (paragraphs [52], [114], [120]).

### Disclosure of Invention

### Technical Problem

However, as a result of the current mobile communication network architecture, when an Access Network (AN) is selected according to a preset policy, states of ANs and user equipment (for example, congestion levels of ANs and strengths of signals received by the user equipment from ANs) are not considered for access network selection. Consequently, service quality perceivable to a user may be degraded.

The above information is presented as background information only to assist with an understanding of the present disclosure. No determination has been made, and no assertion is made, as to whether any of the above might be applicable as prior art with regard to the present disclosure.

### Solution to Problem

Aspects of the present disclosure are to address at least the above-mentioned problems and/or disadvantages to provide at least the advantages described below. Accordingly, an aspect of certain embodiments of the present disclosure is to provide a method and apparatus that enable a user equipment to select and use a most appropriate Access Network (AN) in a wireless communication system including heterogeneous networks in consideration of signal strengths and congestion states of ANs.

According to a first aspect of the invention a method according to claim 1 is provided.

According to a second aspect of the invention a user equipment according to claim 5 is provided.

The invention is defined by the independent claims. Further aspects of the invention are outlined in the dependent claims. When the term "embodiment" is used for describing an unclaimed combination of features, it has to be understood as referring to examples useful for understanding the present invention.

Other aspects, advantages, and salient features of the disclosure will become apparent to those skilled in the art from the following detailed description, which, taken in conjunction with the annexed drawings, discloses various embodiments of the present disclosure.

### Advantageous Effects of Invention

According to various embodiments of the present disclosure, a UE can select an AN to be used to transfer traffic according to congestion states of AN s and received signal strengths. Hence, service quality perceived by the user may be increased in comparison to a related art technique.

### Brief Description of Drawings

The above and other aspects, features, and advantages of various embodiments of the present disclosure will be more apparent from the following description taken in conjunction with the accompanying drawings, in which:
FIG. 1 illustrates use of heterogeneous Access Networks (ANs) in a mobile communication system according to an embodiment of the present disclosure.
FIG. 2 illustrates a method of setting whether to apply an offloading policy to user traffic according to a first embodiment of the present disclosure.
FIG. 3 illustrates a method of setting whether to apply an offloading policy to user traffic according to a second embodiment of the present disclosure.
FIG. 4 illustrates information exchange among wireless networks and network entities according to a first embodiment of the present disclosure.
FIG. 5 illustrates policy control information that may be sent by a policy controller to a policy server according to an embodiment of the present disclosure.
FIG. 6 is a sequence diagram of a procedure for traffic offloading according to a first embodiment of the present disclosure.
FIG. 7 is a bock diagram of a policy controller according to a first embodiment of the present disclosure.
FIG. 8 is a bock diagram of a policy server according to a first embodiment of the present disclosure.
FIG. 9 illustrates information exchange among wireless networks and network entities according to a second embodiment of the present disclosure.
FIG. 10 illustrates a structure of an Inter-system Routing Policy (ISRP) according to an embodiment of the present disclosure.
FIG. 11 illustrates a ForFlowBased Rule being a rule included in an ISRP according to an embodiment of the present disclosure.
FIG. 12 illustrates a structure of a RoutingCriteria according to an embodiment of the present disclosure.
FIG. 13 illustrates a structure of a RoutingRule extended to include a validity condition according to an embodiment of the present disclosure.
FIGS. 14, 15, 16, and 17 illustrate state information of ANs delivered to user equipments according to an embodiment of the present disclosure.
FIG. 18 is a flowchart illustrating operations of a user equipment when a ValidityCondition is included in a RoutingCriteria according to a second embodiment of the present disclosure.
FIG. 19 is a flowchart illustrating operations of a user equipment when an AccessCondition is included in a RoutingRule according to a second embodiment of the present disclosure.
FIG. 20 is a block diagram of a user equipment according to a second embodiment of the present disclosure.

Throughout the drawings, it should be noted that like reference numbers are used to depict the same or similar elements, features, and structures.

### Mode for the Invention

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The following description of various embodiments of the present disclosure is focused on 3GPP LTE systems. However, it should be apparent to those skilled in the art that the subject matter of the present disclosure is also applicable to other communication/computer systems having a similar technical basis and system configuration without significant modification. Particularly, in the present disclosure, "congestion state" refers to at least one of a state of traffic in an Access Network (AN) and a state of available resources (e.g., maximum transfer rate) in the AN. For example, in various embodiments of the present disclosure, a state in which an AN is congested may correspond to at least one of a state in which a large amount of traffic to be delivered is present in the AN and a state in which there is a shortage of available resources in the AN. Conversely, a state in which an AN is not congested (or at a low congestion level) may correspond to at least one of a state in which there is a small amount of traffic to be delivered in the AN and a state in which abundant available resources enable a user equipment to achieve a high transfer rate. In addition, the congestion state may be represented as offload preferences of an AN (e.g., the level of intention of an AN to offload a served user equipment to another AN in consideration of the congestion state thereof).

The present disclosure relates to a method that can increase network performance and user perceived service quality by allocating more radio resources to user data through a non-3GPP AN (non-3GPP AN) in a wireless communication system such as LTE. Use of a 3GPP AN like LTE or a non-3GPP AN may be set in a user equipment or set according to a policy received from a policy server such as a Access Network Discovery and Selection Function (ANDSF). Currently, dynamically setting a policy is difficult. Hence, a policy is unsuitable for a user equipment to dynamically select and use an AN according to signal strengths and congestion states of ANs, which may rapidly change. To address such a problem, the present disclosure provides a scheme for dynamically updating and applying a policy according to user (e.g., user equipment) and AN conditions, and provides two approaches for determining whether to apply a policy according to user (e.g., user equipment) and AN conditions.

Hereinafter, various embodiments of the present disclosure are described in detail with reference to the accompanying drawings.

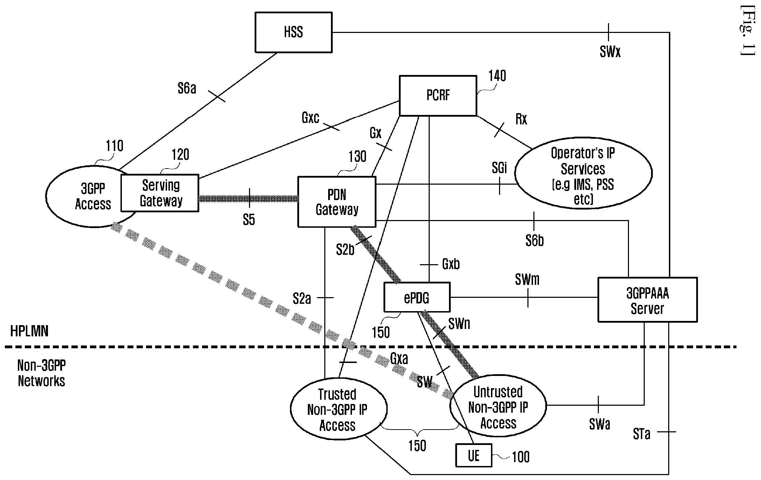

FIG. 1 illustrates use of heterogeneous ANs in a mobile communication system according to an embodiment of the present disclosure.

Referring to FIG. 1, a radio AN of an LTE mobile communication system is composed of base stations (e.g., Evolved Node B, EUTRAN, ENB, or Node B), Mobility Management Entity (MME), and Serving Gateway (S-GW). A User Equipment (UE) 100 may connect to an external network through the ENB, S-GW 120 and PDN Gateway (P-GW) 130.

The ENB corresponds to Node B of the UMTS system. The ENB is connected to the UE 100 through a wireless channel, and may perform more complex functions in comparison with the existing Node B. With reference to FIG. 1, the ENB is assumed to be included in a block indicated by 3GPP Access 110.

In the LTE system, as all user traffic including real-time services such as, for example, VoIP (Voice over IP) services is served by shared channels, performing scheduling on the basis of status information collected from UEs may be necessary. According to various embodiments of the present disclosure, the ENB performs such a scheduling function.

The S-GW 120 provides data bearers, and creates and removes a data bearer under control of the MME.

The MME performs various control functions, and may be connected to multiple ENBs.

The Policy and Charging Rules Function (PCRF) 140 is an entity for controlling policies related to Quality of Service (QoS) and charging.

As shown, the mobile communication system may be accessed through not only a 3GPP AN (also referred to as a first wireless network) such as LTE, or the like, but also a non-3GPP AN 150 (also referred to as a second wireless network) such as WiFi, WiMAX, CDMA2000, or the like.

A user may connect to the P-GW 130 through the non-3GPP AN 150 for data transmission and reception. A separate node known as evolved Packet Data Gateway (ePDG) 150 may be used to handle security and QoS mapping. In this case, the non-3GPP AN is referred to as an untrusted non-3GPP AN. The ePDG 150 performs authentication for the UE 100 and creates a tunnel to the UE 100 to make an untrusted AN with a security risk be trusted. The UE 100 being trusted is connected to the P-GW 130 through the ePDG 150.

When a UE 100 can use 3GPP and non-3GPP ANs to connect to the mobile communication system for data transmission and reception, a criterion for selecting an AN is needed. Such a criterion is referred to as an AN selection policy (abbreviated to "policy"). The policy may be preset in the UE 100 or provided from a separate server such as Access Network Discovery and Selection Function (ANDSF). The ANDSF is an entity providing descriptions for handover between heterogeneous networks. The ANDSF collects and stores information regarding networks and operator policies in advance, and provides the collected information to a UE 100 upon request.

Next, a description is given of a scheme for setting whether to permit transmission of user traffic through any available AN as a prerequisite for a method that enables a UE to select and use the most appropriate AN in consideration of signal strengths and congestion states of ANs, serving as an embodiment of the present disclosure. For example, for a user subscribed to an LTE service, offloading user traffic onto a WiFi network without prior notice may be considered unfair. Hence, obtaining prior consent from a user for whether to accept application of a traffic offloading policy may be necessary.

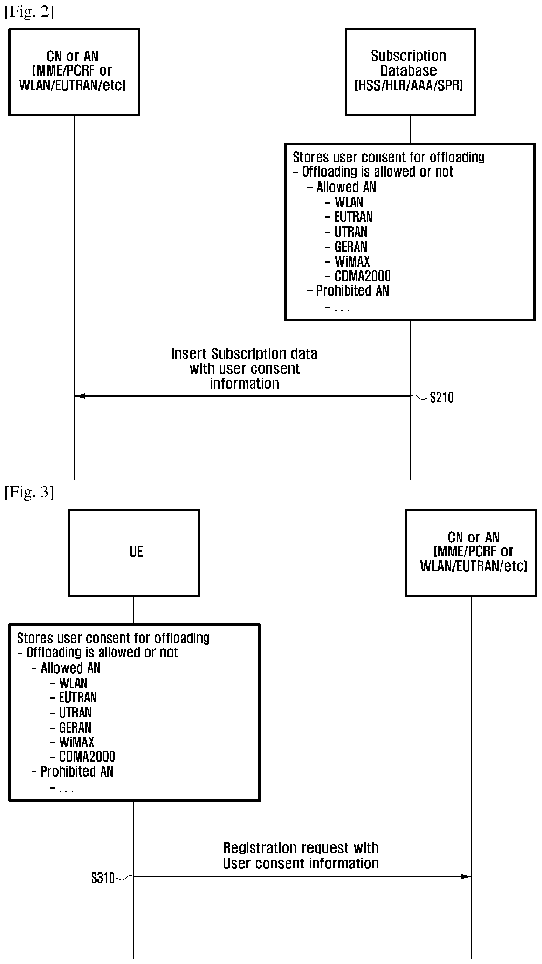

A scheme for setting whether to apply an offloading policy to user traffic is described with reference to FIGS. 2 and 3.

FIG. 2 illustrates a method of setting whether to apply an offloading policy to user traffic according to a first embodiment of the present disclosure.

Referring to FIG. 2, according to the method of setting whether to apply an offloading policy to user traffic when a user subscribes to an operator service, the user selects an option for application of a traffic offloading policy as part of subscription/ contract information and the selection information is stored in a subscription information database such as Home Subscriber Server (HSS) database, Home Location Register (HLR) database, an Authentication, Authorization, and Accounting (AAA) database, or the like.

Information on whether to apply an offloading policy to a user may be stored in a subscription information database as offloading related subscription information for a user as shown in FIG. 2. At operation S210, when user subscription information is provided to the core network, AN, policy controller or policy server, offloading related subscription information may be inserted into the user subscription information to be delivered.

The offloading related subscription information for a user may include a flag indicating user consent to offloading and a field indicating permission or non-permission of offloading for individual ANs.

An entity having received offloading related subscription information for a user may use the offloading related subscription information to determine candidate ANs when a policy is created or updated and to determine whether to permit traffic offloading for the corresponding UE.

FIG. 3 illustrates a method of setting whether to apply an offloading policy to user traffic according to a second embodiment of the present disclosure.

Referring to FIG. 3, according to the method of setting whether to apply an offloading policy to user traffic, at operation S310, the user uses a UE to create offloading related subscription information and to send the offloading related subscription information to the core network entities, AN, policy controller, policy server, or the like.

The procedure of FIG. 3 is similar to the procedure of FIG. 2.

Next, a description is given of a method for selectively using an AN according to UE or AN states. The following description of the present disclosure is divided into a first embodiment and a second embodiment.

According to the first embodiment of the present disclosure, the policy controller sends collected information on ANs to the policy server, and the policy server updates policies on AN priorities for UEs and sends the updated policies to UEs.

According to the second embodiment of the present disclosure, the policy server sends only reference information for AN selection to a UE, and the UE prioritizes ANs for connection by comparing the reference information with currently measured wireless states of ANs.

### First Embodiment

Hereinafter, a description is given of the first embodiment of the present disclosure according to which the policy controller sends collected information on ANs to the policy server and the policy server updates policies on AN priorities for UEs and sends the updated policies to UEs.

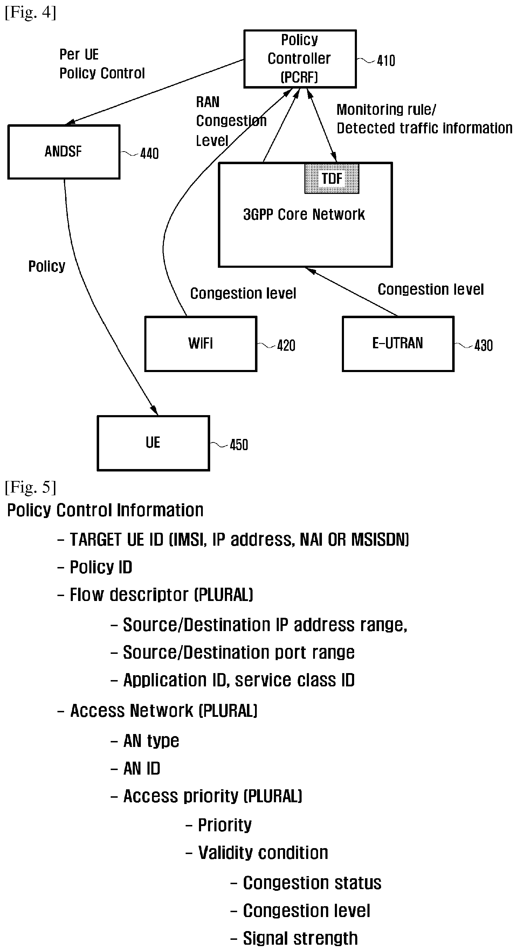

FIG. 4 illustrates information exchange among wireless networks and network entities according to a first embodiment of the present disclosure.

Referring to FIG. 4, each AN reports state information to the policy controller 410 (e.g., PCRF). ANs may include E-UTRAN 430, GERAN, and UTRAN as a first wireless network, and WiFi (e.g., a Wireless Local Area Network (WLAN)) 420, WiMAX, and CDMA2000 as a second wireless network, or a non-3GPP AN. State information of an AN includes a congestion status or congestion level.

The policy controller 410 attempts to change AN priorities for user traffic according to collected state information of ANs and characteristics of user traffic.

The policy controller 410 sends such control information to the policy server 440 (e.g., ANDSF). For example, when E-UTRAN to which the user is attached is congested and WLAN near the user is not congested, the policy controller 410 may direct the policy server 440 to raise access priority of a WLAN (e.g., specifically the WLAN near the user) over a E-UTRAN (e.g., specifically the E-UTRAN to which the user is attached) for the user.

The policy server 440 updates a policy for a UE 450 according to control information received from the policy controller 410 and sends the updated policy to the UE 450. The UE 450 selects an AN to transfer traffic according to the updated policy.

For example, assume that initial access priorities of E-UTRAN and WiFi are set respectively to 1 and 2 for the UE 450. Further, assume that, at some time later, state information of ANs collected by the policy controller 410 indicates an increase in the congestion level of E-UTRAN. Then, the policy controller 410 sends the collected state information of ANs to the policy server 440. The policy server 440 updates a policy for the UE 450 so that WiFi has a higher access priority than E-UTRAN, and sends the updated policy to the UE 450. Thereafter, the UE 450 sends traffic through WiFi according to the newly updated policy.

Next, a detailed description is given of a scheme for a non-3GPP AN to send state information to the policy controller 410.

When a non-3GPP AN is trusted and has a connection with the policy controller 410, the non-3GPP AN may directly send state information to the policy controller 410. A trusted non-3GPP AN may notify the policy controller 410 of the state of the trusted non-3GPP AN (e.g., AN type, AN ID, congestion status and congestion level) through a Gateway Control Session Establishment procedure or a Gateway Control and QoS Rules Provision procedure.

"AN type" indicates an AN type such as 3GPP (UTRAN/GERAN/E-UTRAN), WLAN, WiMAX or 3GPP2. "AN ID" indicates an AN identifier. For example, AN ID may be Public Land Mobile Network (PLMN), Tracking Area Code (TAC), Location Area Code (LAC) or Cell ID for 3GPP, Service Set Identification (SSID), Basic Service Set Identification (BSSID), or Homogenous Extended Service Set Identification (HESSID) for WLAN, Base Station Identification (BS-ID) or Network Access Provider Identification (NAP-ID) for WiMAX, and System Identification (SID), Network Identification (NID), or Base_ID for 3GPP2. "Congestion status" may be 1-bit data indicating presence of congestion (yes or no), and "congestion level" may be represented as a normalized factor indicating a ratio of used resources to total resources.

In the event that a non-3GPP AN is connected to the policy controller 410 via a functional entity such as Bearer Binding and Event Reporting Function (BBERF), the non-3GPP AN may send to the BBERF state information indicating a state of the non-3GPP (e.g., AN type, AN ID, congestion status and congestion level). Thereafter, the BBERF may forward the same to the policy controller 410.

In the event that a non-3GPP AN is untrusted, the untrusted non-3GPP AN communicates with the policy controller 410 via a gateway of the operator network such as ePDG. The untrusted non-3GPP AN sends, to the ePDG, state information (e.g., AN type, AN ID, congestion status and congestion level) indicating a state of the untrusted non-3GPP AN. Thereafter, the ePDG forwards the same to the policy controller 410.

State information of a non-3GPP AN (AN type, AN ID, congestion status and congestion level) may be sent through the P-GW to the policy controller 410. Communication (e.g., transmission) of the state information may be achieved differently according to the Mobile IP protocol (DSMIPv6, PMIP, or GTP) supported by a UE and a network.

When DSMIPv6 is supported, the UE measures the congestion level of a non-3GPP AN (e.g., as described below). The UE sends the AN state information (e.g., AN type, AN ID, congestion status and congestion level) to the P-GW through a message such as Binding Update. The P-GW identifies states of ANs and, when a change is detected, sends change information to the policy controller 410 through a message such as IP-CAN Session Establishment, an IP-CAN Session Modification, or the like.

When PMIP or GTP is supported, a trusted non-3GPP AN sends, to the P-GW, state information (e.g., AN type, AN ID, congestion status and congestion level) indicating a state of the trusted non-3GPP AN through a Proxy Binding Update message. For an untrusted non-3GPP AN, the ePDG forwards state information (e.g., AN type, AN ID, congestion status and congestion level) received from the AN to the P-GW 130 through a Proxy Binding Update message.

The P-GW identifies states of individual ANs and, when a change is detected, sends AN state information (e.g., WLAN AN ID, SSID, HESSID, ESSID, congestion status and congestion level) to the policy controller 410 through a message such as IP-CAN Session Establishment or IP-CAN Session Modification. Similarly, when GTP is supported, AN state information may be sent to the policy controller 410 through a GTP message such as Create Session Request or Modify Bearer Request.

When a UE monitors and maintains state information of a non-3GPP AN, the UE, instead of the non-3GPP AN, may directly send the state information to the policy controller 410. The UE sends an Access Network Info Request message containing collected AN state information (e.g., AN type, AN ID, congestion status and congestion level) to the ANDSF. The policy server 440 may store AN state information received from the UE, and create or update a policy using the AN state information. The policy server 440 may also forward the AN state information to the policy controller 410.

Next, a description is given of information exchange between the policy controller 410 (e.g., PCRF) and the policy server 440 (e.g., ANDSF). Such information exchange may enable a more appropriate AN selection.

When the policy controller 410 has AN state information, information exchange may notify the policy controller 410 of the AN state information, helping the policy controller 410 create and/or update policies. To this end, the policy controller 410 may insert the following information to a message to be sent to the policy server 440 such as Policy Update Request.

Access network information may include an indication of AN type, AN ID, congestion status, and congestion level.

Upon reception of access network information from the policy controller 410, the policy server 440 updates an information table for a corresponding AN according to the received information. If necessary, the policy server 440 creates and/or updates a policy for the UE 450, and sends the policy (e.g., the updated policy) to the UE 450.

Access network information may also be sent from the policy server 440 to the policy controller 410. When access network information is received from the policy server 440, the policy controller 410 may direct the policy server 440 to create and/or update a specific policy or may notify the policy server 440 of an element to be newly considered.

The policy controller 410 may notify the policy server 440 of elements that are to be considered to generate a policy for a user as shown in FIG. 5.

FIG. 5 illustrates policy control information that may be sent by a policy controller to a policy server according to an embodiment of the present disclosure.

Referring to FIGS. 4 and 5, policy controller 410 may send policy control information to the policy server 440, and the policy server 440 may generate or update a policy for a UE on the basis of the policy control information. Policy control information shown in FIG. 5 includes state information of multiple ANs.

In FIG. 5, "plural" indicates one or more repetitions of an information element in the tree.

"UE ID" indicates ID of a user equipment to which the policy is applied, and may be IMSI, NAI, MSISDN, or IP address. "Access network" indicates an AN that may be selected using the policy, and may have AN type, AN ID, and plural access priorities.

"Access priority" has a validity condition indicating applicability of the priority, and the validity condition may have congestion status, congestion level or signal strength as a factor. Access priority is applied only when all factors of the validity condition are satisfied.

For example, assume that a policy for a traffic flow specifies (WLAN, priority = 1, congestion = no), (WLAN, priority = 3, congestion = yes) and (E-UTRAN, priority = 2, congestion = no). Then, according to priorities and conditions of ANs, the traffic flow is transferred through WLAN when WLAN is not congested, and the traffic flow is transferred through E-UTRAN when WLAN is congested.

When policy control information as shown in FIG. 5 is received from the policy controller 410, the policy server 440 generates and/or updates a policy for a UE in consideration of the policy control information. When the policy control information is related to a particular UE, the policy server 440 generates and/or updates a policy for the UE. When the policy control information is not related to a particular UE (e.g., when no "UE ID" is present), the policy server 440 may apply the policy control information to all UEs.

According another embodiment of the present disclosure, the policy controller 410 may send Inter-System Routing Policy (ISRP), Inter-System Mobility Policy (ISMP) and non-seamless offloading information (information elements inserted in fields of ANDSF MO) together with the policy control information to the policy server 440.

Next, a description is given of a scheme for the policy controller 410 and core network to identify a policy controller 410 sending a policy for a UE. Because a network operator provides multiple policy servers 440 and one UE is connected to one of the policy servers 440, specifying one policy server 440 that delivers access network information to a particular UE by the policy controller 410 may be necessary.

A first scheme to specify a policy server 440 is query-based.

To report information to a policy server 440 or receive a policy or information therefrom, a UE performs a registration procedure. To this end, the UE issues, for example, a Domain Name System (DNS) query containing registered location information (e.g., TA, RA, LA, SSID, BSSID, HESSID, ESSID, or geographic location (as latitude and longitude)) to obtain an address of a policy server 440. A corresponding functional entity (e.g., DNS server) determines a policy server 440 according to the location of the UE, and notifies the address of the determined policy server 440 to the UE. The UE uses the notified address to connect to the corresponding policy server 440.

Thereafter, to identify the policy server 440 connected with the UE, the policy controller 410 wishing to make a policy update request issues a DNS query containing UE location information (e.g., TA, RA, LA, SSID, BSSID, HESSID, ESSID or geographic location). As the same query is issued, the policy controller 410 may obtain a policy server address identical to the policy server address obtained by the UE. Hence, the policy controller 410 may communicate with a policy server 440 to which the user is currently connected.

A second scheme to specify a policy server 440 is to use an ID hash function. To obtain the address of a policy server 440, the UE issues, for example, a DNS query containing the UE ID (e.g., IMSI, MSISDN, NAI or IP address). A corresponding functional entity determines a policy server 440 according to the UE ID and notifies the UE of the address of the determined policy server 440. The UE uses the notified address to connect to the corresponding policy server 440.

To identify the policy server 440 connected with the UE, the policy controller 410 wishing to make a policy update request issues a query including the UE ID (e.g., IMSI, MSISDN, NAI or IP address). As the same query is issued, the policy controller 410 may obtain a policy server address identical to the policy server address obtained by the UE. Hence, the policy controller 410 may communicate with a policy server 440 to which the user is currently connected.

A third scheme to specify a policy server 440 is to use information submitted by a UE connected to the policy server 440 such as UE ID, PLMN ID, ID allocated in the 3GPP system (Globally Unique Temporary Identity (GUTI) or Packet Temporary Mobile Subscriber Identity (P-TMSI)). On the basis of such information, the policy server 440 may identify both an operator network and a core network to which the UE is currently connected. Hence, the policy server 440 may issue a DNS query to determine a policy controller 410 to contact. For policy control, the policy server 440 sends a session create request containing UE ID, address of the policy server 440 and other information to the policy controller 410. Upon reception of the request, the policy controller 410 creates an entry for the UE and sends a session create response including UE, AN, and policy related information (if present) to the policy server 440. When the response is received, a session for UE policy control is established between the policy server 440 and policy controller 410. UE-specific policy control information (described before) is delivered through the session.

Thereafter, when the policy server 440 is changed (e.g., as a result of UE movement), a new policy server 440 establishes a new session with the policy controller 410 similarly to the above procedure. The policy controller 410 sends a session delete request containing UE ID to the old policy server 440 to clean up the old session.

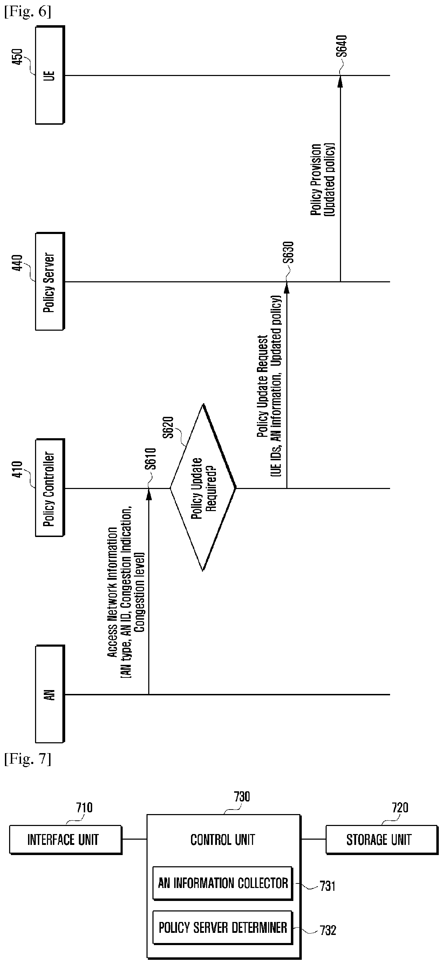

FIG. 6 is a sequence diagram of a procedure for traffic offloading according to a first embodiment of the present disclosure.

At operation S610, the policy controller 410 collects access network information. The access network information may include AN type, AN ID, congestion status, congestion level, and/or the like.

At operation S620, the policy controller 410 determines whether a policy update for a UE is necessary. For example, the policy controller 410 may determine whether a policy update is necessary according to at least one of signal strengths and congestion states of ANs. The policy controller 410 may determine that policy update for a UE is necessary when the access network transmitting UE traffic becomes congested.

When the policy controller 410 determines that a policy update for a UE is necessary at operation S620, the policy controller 410 proceeds to operation S630 at which the policy controller 410 sends a policy update request to a corresponding policy server 440. The policy controller 410 may identify a policy server 440 to which the policy update request is to be sent using the three schemes described before. The policy update request may include UE ID, access network information, updated policy, and/or the like.

"UE ID" indicates identification information of a UE needing policy update.

The access network information may include state information of ANs collected at operation S610. In addition to the access network information, the policy controller 410 may also send policy control information as shown in FIG. 5 to the policy server 440.

The updated policy is a policy whose access priority is updated according to access network state information. Such an updated policy may be created by the policy controller 410 and sent to the policy server 440 as shown in FIG. 6. In another embodiment of the present disclosure, the policy controller 410 may send access network information to the policy server 440 and the policy server 440 may update access priority of a UE on the basis of access network state information (not shown).

Thereafter, at operation S640, the policy server 440 sends the updated policy to the UE 450.

The UE 450 may reselect an access network to be used to send traffic according to the updated policy.

FIG. 7 is a bock diagram of a policy controller according to a first embodiment of the present disclosure.

Referring to FIG. 7, the policy controller 410 may include an interface unit 710, a storage unit 720, and a control unit 730.

The interface unit 710 sends and receives signals to and from wireless network entities and UEs through a wired or wireless interface. In particular, the interface unit 710 may obtain state information from at least one access network. The state information may include at least one of AN type, AN ID, congestion status and congestion level.

The storage unit 720 may store various programs needed for operation of the policy controller 410.

The control unit 730 controls signal flows between internal blocks of the policy controller 410 to control UE policies. In particular, the control unit 730 determines whether a of change an AN selection policy for a UE is necessary in consideration of AN state information. If necessary, the control unit 730 sends a policy update request containing policy update information to the policy server.

In an embodiment of the present disclosure, the control unit 730 may include an AN information collector 731 and a policy server determiner 732.

The AN information collector 731 receives state information from an access network and stores the received state information in the storage unit 720. The AN information collector 731 may obtain state information from a trusted non-3GPP AN, which is connected to the policy controller, through a Gateway Control Session Establishment procedure or a Gateway Control and QoS Rules Provision procedure. The AN information collector 731 may obtain state information from a non-3GPP AN, which is connected to the policy controller via a functional entity, through the BBERF.

The policy server determiner 732 determines a policy server to which the policy controller sends access network information for a UE. To this end, the policy server determiner 732 may utilize a DNS query or an ID hash function. This has been described before and will not be described further.

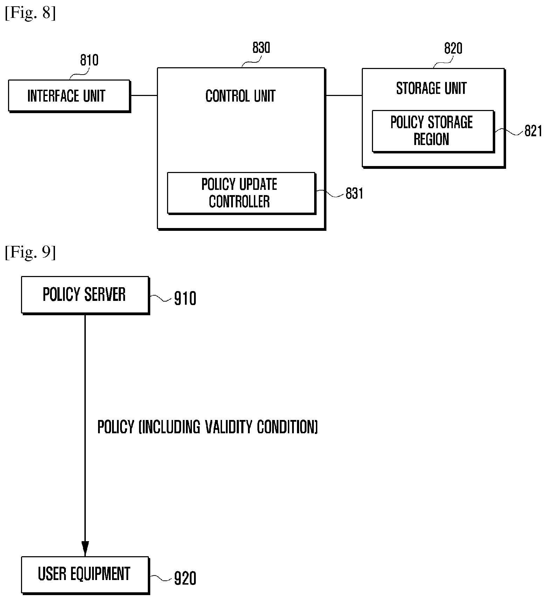

FIG. 8 is a bock diagram of a policy server according to a first embodiment of the present disclosure.

Referring to FIG. 8, the policy server 440 may include an interface unit 810, a storage unit 820, and a control unit 830.

The interface unit 810 sends and receives signals to and from wireless network entities and UEs through a wired or wireless interface. In particular, the interface unit 810 may receive AN state information needed to change an AN selection policy for a UE from a policy controller.

The storage unit 820 may store various programs needed for operation of the policy server 440. In an embodiment of the present disclosure, the storage unit 820 may include a policy storage region 821 to store policies (e.g., policies for UEs).

The control unit 830 controls signal flows between internal blocks of the policy server 440 to control UE policies. In an embodiment of the present disclosure, the control unit 830 may include a policy update controller 831.

The policy update controller 831 performs policy update on the basis of AN state information received from the policy controller 410. The policy update controller 831 sends an updated policy to a corresponding UE and controls the UE to change an AN selection policy accordingly.

### Second Embodiment

Hereinafter, a description is given of the second embodiment of the present disclosure in which the policy server sends reference information for access network selection to a UE, and the UE prioritizes ANs for connection by comparing the reference information with currently measured wireless states of ANs. For example, according to the second embodiment of the present disclosure, the policy server may send only reference information for access network selection to a UE.

FIG. 9 illustrates information exchange among wireless networks and network entities according to a second embodiment of the present disclosure.

Referring to FIG. 9, the UE 920 receives a policy from the policy server 910. The policy includes a validity condition enabling the UE 920 to select an access network. The validity condition may include information regarding congestion status, congestion level (e.g., number of connected UEs, channel utilization, available capacity, capacity and load of a backhaul connected to WLAN, and average access delay time), achievable throughput, Cellular Offload Preference Indicator (COPI), signal strength from the corresponding access network, and/or the like. COPI indicates the level of preference for traffic transmission through another access network instead of the current access network.

Each factor in the validity condition indicates a reference value for access network selection. For example, assume that the reference value for the congestion level is set to 60 percent. According to such an assumption, the UE treats the access network as a candidate access network only when the measured congestion level of an access network is below 60 percent. A validity condition set by the policy server for access network selection may include one or more reference values. In the event that one or more reference values are included in a validity condition, when monitored states of an access network satisfy the reference values, the UE may treat the access network as a candidate access network. For example, assume that reference values of a validity condition are less than or equal to 10 for the number of connected users, less than or equal to 50 ms for the average access delay time, and less than or equal to 200 for channel utilization. When monitored states of an access network satisfy the reference values, the access network is treated as a candidate access network.

Similarly, the achievable throughput may be used as a reference for access network selection. For example, assume that the reference value for the achievable throughput contained in the validity condition is set to 1 Mbps. According to such an assumption, the UE may treat an access network whose measured throughput is greater than or equal to 1 Mbps as a candidate access network.

When COPI is included in the validity condition, the UE determines whether an access network is a candidate by comparing COPI obtained from the access network with the reference COPI. For example, assume that COPI contained in the validity condition is less than or equal to 5. According to such an assumption, when COPI obtained from an access network is less than or equal to 5, the UE treats the access network as a candidate access network.

Similarly, assume that the reference value for the signal strength included in the validity condition is set to 5. According to such an example, the UE treats an access network whose measured signal strength is greater than or equal to 5 as a candidate access network.

For a factor contained in the validity condition, the UE may directly obtain measurement information by monitoring information channels of an access network or receive measurement information from an access network. In addition, an access network may provide information on another access network to the UE (e.g., 3GPP EUTRAN may provide congestion information of nearby WLAN APs).

If measurement information obtained from an access network satisfies the validity condition, then the UE treats the access network as a candidate access network for access network selection.

The UE selects an access network with the highest priority among candidate ANs and transmits traffic through the selected access network.

Next, a description is given of a scheme to insert a validity condition into a policy sent by the policy server 910 to the UE 920. As described above, a policy sent by the policy server 910 to the UE 920 may include a validity condition for each access network.

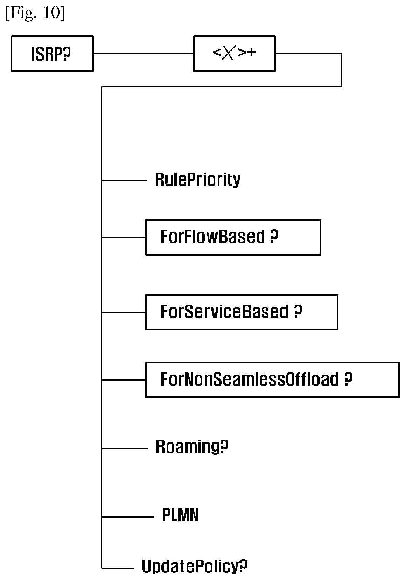

FIG. 10 illustrates a structure of an ISRP according to an embodiment of the present disclosure.

Referring to FIG. 10, a structure of an ISRP being a policy provided by the ANDSF serving as a policy server is illustrated. As shown in FIG. 10, a policy such as ISRP may include multiple rules (Rule Priority, ForFlowBased, ForServiceBased and the like).

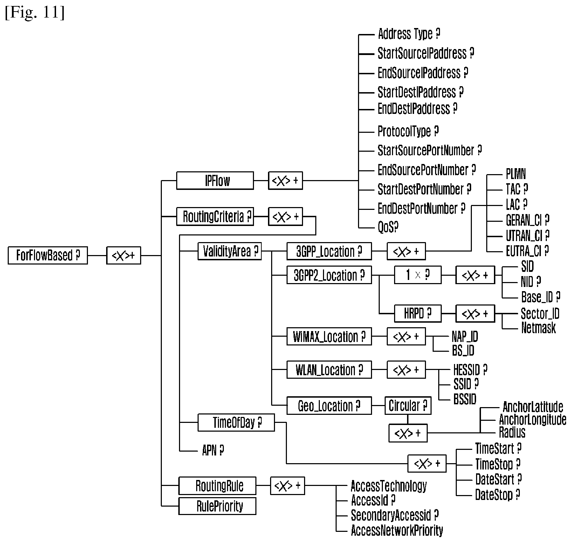

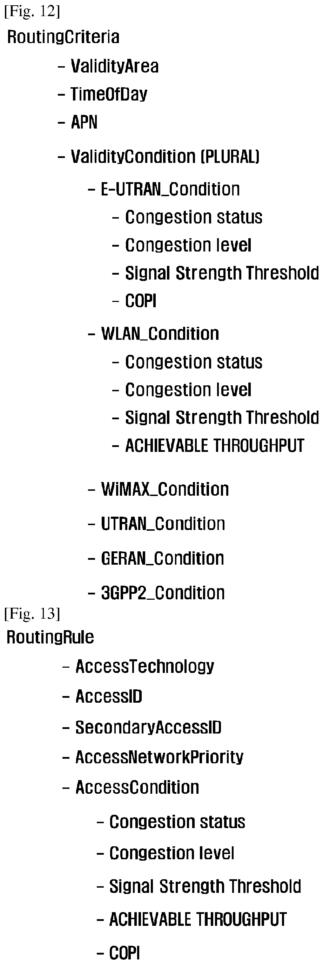

FIG. 11 illustrates a ForFlowBased rule being a rule included in ISRP according to an embodiment of the present disclosure. FIG. 12 illustrates a structure of a RoutingCriteria according to an embodiment of the present disclosure

Referring to FIGS. 11 and 12, for policy application based on access network conditions, the ForFlowBased rule illustrated in FIG. 11 may be extended as shown in FIG. 12.

For ease of description, only ISRP (FIG. 10) and ForFlowBased (FIG. 11) are described herein. However, the same extension and concept may be applied to another policy, and ForServiceBased or ForNonSeamlessOffload. For example, the concept and operation of the present disclosure are not limited to specific formats of ANDSF fields, and may be applied to new formats created by ANDSF extension without much modification.

Referring to FIG. 12, the UE 920 receives a policy (e.g., ISRP) from the policy server 910 and identifies a rule (e.g., ForFlowBased). The UE 920 may apply the identified rule only when RoutingCriteria is satisfied.

In an embodiment of the present disclosure, RoutingCriteria may include a ValidityCondition field in addition to existing information elements. The ValidityCondition field includes factors to be checked for each AN. Such factors may include at least one of a congestion status, a congestion level, an achievable throughput, a COPI, and a signal strength, and such factors may have different formats or values according to ANs. Such factors to be checked for each AN may be included in the ValidityCondition field or be directly included in the RoutingCriteria field (e.g., the COPI field may be directly attached to the RoutingCriteria field). Other forms are also possible. FIG. 12 merely illustrates an example of an information structure used by the policy server to set a validity condition, and the policy server may deliver a validity condition represented as a combination of the above information elements to the UE.

For example, as a reference for congestion status, the ratio of Physical Resource Blocks (PRBs) used for actual transmission to total PRBs may be used in E-UTRAN, and the number of stations associated with a given AP, the ratio of time used for actual transmission to Target Beacon Transmission Time (TBTT) or BSS average access delay may be used in WLAN. One or more reference values may be set for one factor in the validity condition. For example, for WLAN selection, the number of associated stations and average access delay may be set as reference values for the congestion status.

When RoutingCriteria received by the UE includes congestion status or congestion level, COPI, and achievable throughput as ValidityCondition, the UE may treat an AN satisfying ValidityCondition (e.g., an AN that is not congested or having a congestion level below a corresponding reference value, measured throughput is above corresponding reference value, and COPI is below corresponding reference value) as a candidate AN.

Similarly, when signal strength is given as ValidityCondition, the UE may treat an AN whose measured signal strength is greater than the reference value of signal strength given as ValidityCondition as a candidate access network.

More specifically, for example, assume that RoutingRule of ForFlowBased includes (AccessTechnology = WLAN, Priority = 0), (AccessTechnology = 3GPP, Priority = 1) and ValidityCondition of RoutingCriteria specifies a congestion level for WLAN. According to such an assumption, when WLAN congestion information measured by the UE does not satisfy the reference value for the congestion level given in ValidityCondition (e.g., a measured congestion level exceeds the reference value), although WLAN priority is higher than 3GPP priority, the UE may be required to transmit traffic related to IPFlow through a 3GPP AN.

In the above description, RoutingCriteria is extended so as to include ValidityCondition for AN selection.

In another embodiment of the present disclosure, RoutingRule may be extended so as to include ValidityCondition for AN selection.

FIG. 13 illustrates a structure of a RoutingRule extended to include a validity condition for AN selection according to an embodiment of the present disclosure.

Referring to FIG. 13, a structure of a RoutingRule extended to include a validity condition for AN selection is illustrated.

As shown in FIG. 13, when RoutingRule in ForFlowBased in a received ISRP includes AccessCondition, the UE may apply RoutingRule only when AccessCondition is satisfied.

For example, AccessCondition indicating a usability condition for an AN may be represented using at least one of a congestion status, congestion level (e.g., the number of associated stations, channel utilization, an available capacity, a capacity and load of a backhaul connected to WLAN), an achievable throughput, a COPI, and a signal strength. Extension may be achieved by inserting a separate AccessCondition field into RoutingRule or by directly inserting one or more one of the above factors into RoutingRule (e.g., a COPI field directly attached to the RoutingRule field). Other forms may also be possible. FIG. 13 merely illustrates an example of an information structure used by the policy server to set a validity condition, and the policy server may deliver a validity condition represented as a combination of the above information elements to the UE.

More specifically, for example, consider a case in which one ForFlowBased includes three pieces of RoutingRule as follows.
RoutingRule 1 = (AccessTechnology = WLAN, AccessNetworkPriority = 1, AccessCondition = {Congestion status = No})
RoutingRule 2 = (AccessTechnology = WLAN, AccessNetworkPriority = 3, AccessCondition = {Congestion status = Yes})
RoutingRule 3 = (AccessTechnology = E-UTRAN, AccessNetworkPriority = 2)

According to such an example, when WLAN and E-UTRAN are available and WLAN is not congested, the UE transmits IP flows through WLAN (by RoutingRule 1). When WLAN becomes congested, the UE transmits IP flows through a 3GPP AN (E-UTRAN) instead of WLAN (by RoutingRule 3). When the UE is outside the 3GPP coverage and 3GPP access is unavailable, the UE transmits IP flows through WLAN (by RoutingRule 2).

As another example, consider a case where RoutingRule is configured as follows.
RoutingRule 1 = (AccessTechnology = 3GPP (e.g. E-UTRAN), AccessNetworkPriority = 1, COPI < 4)
RoutingRule 2 = (AccessTechnology = WLAN, AccessNetworkPriority = 2, achievable throughput >= 100 kbps)
RoutingRule 3 = (AccessTechnology = 3GPP (e.g. E-UTRAN), AccessNetworkPriority = 3, 4 <= COPI <9)
RoutingRule 4 = (AccessTechnology = WLAN, AccessNetworkPriority = 4, achievable throughput < 100 kbps)

Then, when identified COPI of 3GPP AN is 2, the UE continues to use the 3GPP AN because the identified COPI is low. When COPI is 6 and achievable throughput of WLAN is 200 kbps, the UE selects WLAN according to priority. When identified COPI of 3GPP AN is greater than 9, the UE selects WLAN according to priority.

As another example, consider a case in which RoutingRule is configured as follows.
RoutingRule 1 = (AccessTechnology = 3GPP (e.g. E-UTRAN), AccessNetworkPriority = 1, COPI < 4)
RoutingRule 2 = (AccessTechnology = WLAN, AccessNetworkPriority = 2, achievable throughput >= 100 kbps, BSS average access delay < 50 ms)
RoutingRule 3 = (AccessTechnology = WLAN, AccessNetworkPriority = 3, number of associated stations < 20, channel utilization < 150, BSS average access delay < 100 ms)

According to such an example, when identified COPI of 3GPP AN is 2, the UE continues to use the 3GPP AN because the identified COPI is low. When COPI is 6, achievable throughput of WLAN is 200 kbps, and BSS average access delay is 25 ms, the UE selects WLAN according to an applicable priority. Although COPI is 6 and achievable throughput of WLAN is 50 kbps, when the number of associated stations is 10, channel utilization is 100, and BSS average access delay is 70 ms, the UE may select WLAN according to an applicable priority.

In the second embodiment of the present disclosure, the UE determines applicability of a policy according to AN conditions (e.g., congestion, achievable throughput, COPI, signal strength and the like). To this end, the UE may be required to obtain state information of ANs. Next, a description is given of a scheme for an AN to notify the UE of state information of the AN.

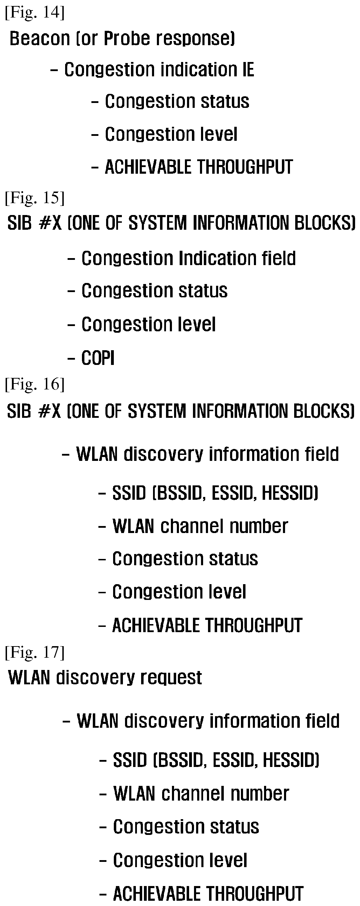

FIGS. 14, 15, 16, and 17 illustrate state information of ANs delivered to UEs according to an embodiment of the present disclosure.

Referring to FIGS. 14, 15, 16, and 17, state information of ANs that is delivered to UEs may have inserted therein information indicating a congestion status or congestion level. For example, as illustrated in FIG. 14, a WLAN may insert state information indicating congestion status or congestion level into a beacon frame or probe response frame to be transmitted. When a beacon or probe response frame including a congestion indication IE is received from a WLAN, the UE compares a reference value for a validity condition included in a policy with the congestion indication IE. When the congestion level of the WLAN is less than the reference value, the UE may send traffic through the WLAN. An AP may transmit a BSS load status IE. An AP may transmit a value for achievable throughput when a user is initially connected. In addition, the UE may determine satisfiability of the validity condition using BSS average access delay received from AP when average access delay time is given as the validity condition.

In another embodiment of the present disclosure, although a WLAN AP does not explicitly transmit a congestion indication IE, the UE may identify a congestion state of the WLAN. The UE may identify WLAN congestion state by monitoring a WLAN channel for several TBTTs (target beacon transmission time, 100 ms by default) to determine a ratio of time used for actual transmission to the total time. For back-off operation during WLAN usage, the UE maintains a congestion window (back-off window). In this case, the UE may determine that the WLAN is congested when the congestion window size is greater than a threshold.

In addition, a 3GPP AN may notify a UE of the congestion status of the 3GPP AN.

Specifically, base stations (ENB or BSC/RNC) of a 3GPP AN periodically broadcast essential information needed for system utilization as System Information Block (SIB). A base station broadcasts an SIB containing congestion status, congestion level or COPI as shown in FIG. 15. Upon reception of the SIB, the UE may identify AN congestion status.

When a congestion indication field is contained in an SIB received from a base station, the UE compares a reference value for a validity condition included in a policy with the congestion indication IE. When the congestion level of the 3GPP AN is less than the reference value, the UE may send traffic through the 3GPP AN. When a COPI field is included in a received SIB, the UE compares a COPI reference value for a validity condition included in a policy with the received COPI value. When the received COPI value is greater than the COPI reference value, the UE attempts to send traffic through a valid AN (e.g., an AN being accessible and having a higher priority) other than the 3GPP AN.

A congestion indication field may be included not only in an SIB but also in an RRC message being unicast to the UE (e.g., RRC Connection Setup, RRC Connection Reconfiguration or the like).

A 3GPP AN base station may provide a UE with information regarding nearby WLANs. To this end, the 3GPP AN base station may broadcast a specific SIB including WLAN information (e.g., WLAN candidate near UE, WLAN channel, congestion state, achievable throughput, or the like) as shown in FIG. 16, or may send an RRC message including WLAN information to each UE as shown in FIG. 17. Upon reception of such SIB or message, the UE may identify a state of a nearby WLAN AN on the basis of the received information, thereby reducing unnecessary scanning. When a 3GPP AN unicasts nearby AN information, the 3GPP AN may consider a current location of the UE. Consideration of the current location of the UE provides useful WLAN information with respect to the location of the UE because 3GPP AN coverage may be much wider than WLAN coverage. To achieve such a benefit, the 3GPP AN may identify current location of a UE by sending a query for current location to the UE and receiving a corresponding response therefrom or by using other means (e.g., triangulation and a location tracking server) and may determine AN information to be provided on the basis of the identified UE location.

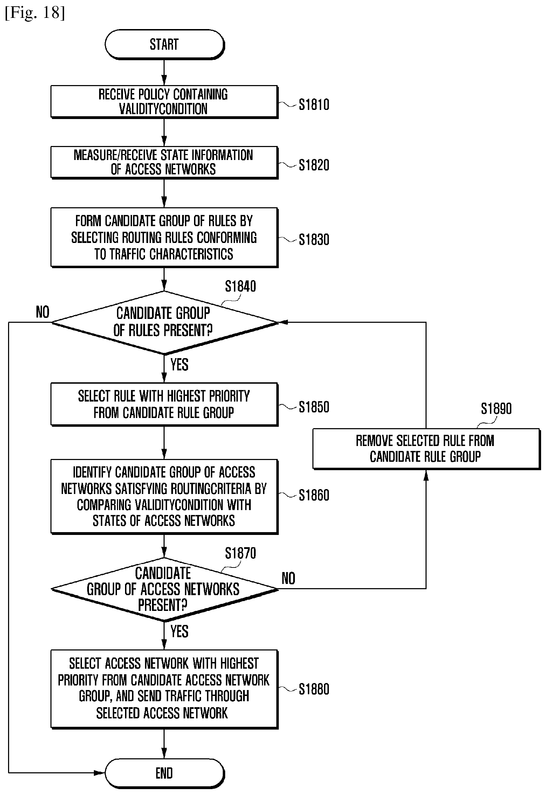

FIG. 18 is a flowchart illustrating operations of a UE when a ValidityCondition is included in a RoutingCriteria according to a second embodiment of the present disclosure.

Referring to FIG. 18, at operation S810, the UE 920 receives a policy containing ValidityCondition.

At operation S1820, the UE 920 obtains state information of ANs. To obtain AN state information, the UE 920 may directly measure states of an AN or the UE 920 may receive state information from an AN using schemes described above.

At operation S1830, the UE 920 creates a candidate group of rules by selecting routing rules conforming to traffic characteristics. For example, the UE 920 may create a candidate group of rules by selecting rules related to IPflow.

At operation S1840, the UE 920 determines whether a candidate group of rules is present.

If the UE 920 determines that a candidate group of rules is present at operation S1840, the UE 920 proceeds to operation S1850 at which the UE 920 selects a rule with the highest priority from the candidate rule group.

Thereafter, at operation S1820, the UE 920 identifies a candidate group of ANs satisfying RoutingCriteria by comparing the validity condition with states of ANs.

At operation S1860, the UE 920 determines whether a candidate group of ANs satisfying RoutingCriteria is present.

If the UE 920 determines that a candidate group of ANs is not present at operation S1860, the UE 920 proceeds to operation S1890 at which the UE 920 removes the selected rule from the candidate rule group at operation S1890 and thereafter returns to operation S1840.

If the UE 920 determines that a candidate group of ANs is present at operation S1870, then the UE 920 proceeds to operation S1880 at which the UE 920 selects an AN with the highest priority from the candidate AN group and sends traffic through the selected AN.

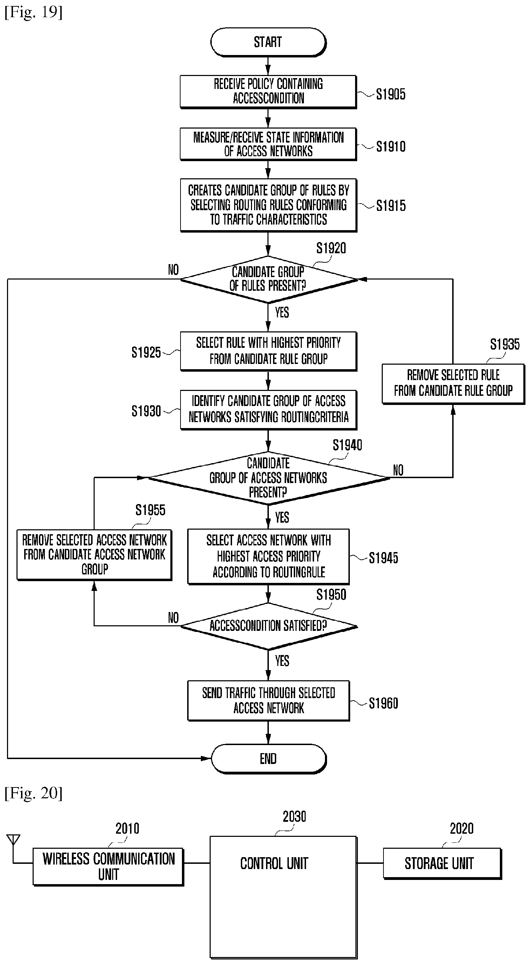

FIG. 19 is a flowchart illustrating operations of the UE when an AccessCondition is included in a RoutingRule according to a second embodiment of the present disclosure.

Referring to FIG. 19, at operation S1905, the UE 920 receives a policy containing AccessCondition.

At operation S1910, the UE 920 obtains information on ANs. To obtain AN state information, the UE 920 may directly measure states of an AN or may receive state information from an AN using schemes described above.

At operation S1915, the UE 920 creates a candidate group of rules by selecting routing rules conforming to traffic characteristics. For example, the UE 920 may create a candidate group of rules by selecting rules related to IPflow.

At operation S1920, the UE 920 determines whether a candidate group of rules is present.

If the UE 920 determines that a candidate group of rules is present at operation S1920, then the UE 920 proceeds to operation S1925 at which the UE 920 selects a rule with the highest priority from the candidate rule group.

Thereafter, at operation S1930, the UE 920 identifies a candidate group of ANs satisfying RoutingCriteria.

At operation S1940, the UE 920 determines whether a candidate group of ANs satisfying RoutingCriteria is present.

If the UE 920 determines that a candidate group of ANs satisfying RoutingCriteria is not present at operation S1940, then the UE 920 proceeds to operation S1935 at which the UE 920 removes the selected rule from the candidate rule group and thereafter returns to operation S1920.

If the UE 920 determines that a candidate group of ANs satisfying RoutingCriteria is present at operation S1940, then the UE 920 proceeds to operation S1945 at which the UE 920 selects an AN with the highest access priority according to RoutingRule.

At operation S1950, the UE 920 determines whether the selected AN satisfies AccessCondition.

If the UE 920 determines that the selected AN satisfies AccessCondition at operation S1950, then the UE 920 proceeds to operation S1960 at which the UE 920 sends traffic through the selected AN.

If the UE 920 determines that the selected AN does not satisfy AccessCondition at operation S1950, then UE 920 proceeds to operation S1955 at which the UE 920 removes the selected AN from the candidate AN group and thereafter returns to operation S1940.

FIG. 20 is a block diagram of a UE according to a second embodiment of the present disclosure.

Referring to FIG. 20, the UE may include a wireless communication unit 2010, a storage unit 2020, and a control unit 2030.

The wireless communication unit 2010 sends and receives data for wireless communication of the UE. The wireless communication unit 2010 may include an RF transmitter for upconverting the frequency of a signal to be transmitted and amplifying the signal, and an RF receiver for low-noise amplifying a received signal and downconverting the frequency of the received signal. The wireless communication unit 2010 may receive data through a wireless channel and forward the data to the control unit 2030, and may receive data from the control unit 2030 and transmit the data through a wireless channel. The wireless communication unit 2010 may send and receive signals to and from one or more entities constituting the wireless communication system of the present disclosure.

The storage unit 2020 stores various programs needed for operation of the UE. According to various embodiments of the present disclosure, the storage unit 2020 may store policies for AN selection. The policies may be updated as necessary.

The control unit 2030 performs signal exchange between internal blocks so as to control overall operation of the UE. Specifically, the control unit 2030 controls an operation to receive a policy containing a validity condition for AN selection from a policy server. The validity condition may include at least one of congestion status, congestion level and signal strength of an AN.

The control unit 2030 controls an operation to obtain state information of one or more ANs. To obtain AN state information, the control unit 2030 may receive state information from an AN or may directly measure states of an AN.

The control unit 2030 controls an operation to create a candidate group of UE selectable ANs by comparing the validity condition with the AN state information. The control unit 2030 may compare reference values of factors constituting the validity condition with the AN state information to form a candidate group of UE selectable ANs.

The control unit 2030 controls an operation to select an AN with the highest priority from the candidate AN group and to send traffic through the selected AN.

Although not shown, according to various embodiments of the present disclosure, the policy server 910 may include a wireless communication unit and a control unit. The wireless communication unit may send and receive signals to and from one or more entities constituting the wireless communication system, and the control unit may control an operation to generate a policy enabling a UE to select an AN and to send the policy to the UE.

According to various embodiments of the present disclosure, a UE can select an AN to be used to transfer traffic according to congestion states of ANs and received signal strengths. Hence, service quality perceived by the user may be increased in comparison to a related art technique. In particular, policy server generates an access network selection policy which is provided to the UE. The policy may contain a list of access networks. Each access network contained in the list may be allocated a priority value for enable the UE to evaluate relative precedence among access networks. Also, the policy contains conditions in terms of the congestion status of ANs and received signal strength. According to the structure of policy and its implementation, the application of these conditions can be per policy or per access network. For example, it is possible to decide whether the policy is usable or not based on the result of evaluating the conditions. On the other hand, if the conditions are given to each access network, it is also possible to decide whether the access network can be a candidate for network selection or not based on the result of evaluating the conditions. Such conditions can be the combination of the number of associated stations, channel utilization (e.g., BSS load element), an available capacity, a capacity and load of a backhaul connected to WLAN (e.g., WAN metrics), an achievable throughput, a COPI, and a signal strength. Each condition parameter in the policy is used as a threshold value._ When the conditions are applied to each access network, the UE considers only access networks of which conditions are satisfied as candidates for the network selection.

It will be appreciated that various embodiments of the present disclosure according to the claims and description in the specification can be realized in the form of hardware, software or a combination of hardware and software.

Any such software may be stored in a non-transitory computer readable storage medium. The non-transitory computer readable storage medium stores one or more programs (software modules), the one or more programs comprising instructions, which when executed by one or more processors in an electronic device, cause the electronic device to perform a method of the present disclosure.

Any such software may be stored in the form of volatile or non-volatile storage such as, for example, a storage device like a Read Only Memory (ROM), whether erasable or rewritable or not, or in the form of memory such as, for example, Random Access Memory (RAM), memory chips, device or integrated circuits or on an optically or magnetically readable medium such as, for example, a Compact Disk (CD), Digital Versatile Disc (DVD), magnetic disk or magnetic tape or the like. It will be appreciated that the storage devices and storage media are various embodiments of non-transitory machine-readable storage that are suitable for storing a program or programs comprising instructions that, when executed, implement various embodiments of the present disclosure. Accordingly, various embodiments provide a program comprising code for implementing apparatus or a method as claimed in any one of the claims of this specification and a non-transitory machine-readable storage storing such a program.

Although various embodiments of the present disclosure have been described in detail hereinabove, it should be understood that many variations and modifications of the basic inventive concept described herein will still fall within the scope of the present disclosure as defined in the appended claims.

## Claims

1. A method for selecting an access network, AN, by a user equipment, UE, (100, 920) in a wireless communication system, the method comprising:
receiving (SI810), from a policy server (910), an AN selection policy including first information indicating offload preference;
receiving, from a base station, state information on at least one AN including second information indicating offload preference;
comparing the first information with the second information and
selecting an AN to be accessed based on a result of the comparison.

2. The method of claim 1, wherein the first information includes a cellular offload preference indicator, and the second information includes a cellular offload preference indicator.

3. The method of claim 1, wherein the policy server includes an access network discovery and selection function, ANDSF.

4. The method of claim 1, wherein the state information is received through a system information block, SIB, message or a radio resource control, RRC, message from the base station.

5. A user equipment, UE, (100, 920) for selecting an access network, AN, in a wireless communication system, the UE (100, 920) comprising:
a wireless communication unit (2010) configured to transmit and receive signals; and
a control unit (2030) configured to:
control the wireless communication unit to receive, from a policy server (910), an AN selection policy including first information indicating offload preference,
control the wireless communication unit to receive, from a base station, state information on at least one AN including second information indicating offload preference,
compare the first information with the second information, and
select an AN to be accessed based on a result of the comparison.

6. The UE (100, 920) of claim 5, wherein the first information includes a cellular offload preference indicator, and the second information includes a cellular offload preference indicator.

7. The UE (100, 920) of claim 5, wherein the policy server includes an access network discovery and selection function, ANDSF.

8. The UE (100, 920) of claim 5, wherein the state information is received through a system information block, SIB, message or a radio resource control, RRC, message from the base station.

## Patentansprüche

1. Verfahren zur Auswahl eines Zugangsnetzes, AN, durch ein Teilnehmergerät, UE, (100, 920) in einem drahtlosen Kommunikationssystem, wobei das Verfahren folgendes umfasst:
Empfangen (S1810) einer AN-Auswahlrichtlinie von einem Richtlinienserver (910), die erste Informationen umfasst, die eine Offloading-Präferenz anzeigen;
Empfangen von Zustandsinformationen von einer Basisstation, wobei sich die Informationen auf mindestens ein AN beziehen, das zweite Informationen umfasst, welche eine Offloading-Präferenz anzeigen;
Vergleichen der ersten Informationen mit den zweiten Informationen; und
Auswählen eines ANs für einen Zugang auf der Basis eines Ergebnisses des Vergleichs.

2. Verfahren nach Anspruch 1, wobei die ersten Informationen einen Mobilfunk-Offloading-Präferenz-Indikator umfassen, und wobei die zweiten Informationen einen Mobilfunk-Offloading-Präferenz-Indikator umfassen.

3. Verfahren nach Anspruch 1, wobei der Richtlinienserver eine Access Network Discovery and Selection-Funktion, ANDSF, umfasst.

4. Verfahren nach Anspruch 1, wobei die Zustandsinformationen über eine System Information Block-, SIB, Nachricht oder eine Radio Resource Control-, RRC, Nachricht von der Basisstation empfangen werden.

5. Teilnehmergerät, UE, (100, 920) zur Auswahl eines Zugangsnetzes, AN, in einem drahtlosen Kommunikationssystem, wobei das UE (100, 920) folgendes umfasst:
eine drahtlose Kommunikationseinheit (2010), die für die Übermittlung und den Empfang von Signalen gestaltet ist; und
eine Steuereinheit (2030), die für folgende Zwecke gestaltet ist:
Steuern der drahtlosen Kommunikationseinheit, so dass diese von einem Richtlinienserver (910) eine AN-Auswahlrichtlinie empfängt, die erste Informationen umfasst, die eine Offloading-Präferenz anzeigen;
Steuern der drahtlosen Kommunikationseinheit, so dass diese von einer Basisstation Zustandsinformationen über mindestens ein AN empfängt, das zweite Informationen umfasst, welche eine Offloading-Präferenz anzeigen;
Vergleichen der ersten Informationen mit den zweiten Informationen; und
Auswählen eines ANs für einen Zugang auf der Basis eines Ergebnisses des Vergleichs.

6. UE (100, 920) nach Anspruch 5, wobei die ersten Informationen einen Mobilfunk-Offloading-Präferenz-Indikator umfassen, und wobei die zweiten Informationen einen Mobilfunk-Offloading-Präferenz-Indikator umfassen.

7. UE (100, 920) nach Anspruch 5, wobei der Richtlinienserver eine Access Network Discovery and Selection-Funktion, ANDSF, umfasst.

8. UE (100, 920) nach Anspruch 5, wobei die Zustandsinformationen über eine System Information Block-, SIB, Nachricht oder eine Radio Resource Control-, RRC, Nachricht von der Basisstation empfangen werden.

## Revendications

1. Procédé pour sélectionner un réseau d'accès, AN, par un équipement utilisateur, UE, (100, 920) dans un système de communication sans fil, le procédé comprenant :
la réception (S1810), en provenance d'un serveur de politiques (910), d'une politique de sélection d'AN incluant des premières informations indiquant une préférence de délestage ;
la réception, en provenance d'une station de base, d'informations d'état sur au moins un AN incluant des deuxièmes informations indiquant une préférence de délestage ;
la comparaison des premières informations aux deuxièmes informations et
la sélection d'un AN auquel accéder sur la base d'un résultat de la comparaison.

2. Procédé selon la revendication 1, les premières informations incluant un indicateur de préférence de délestage cellulaire, et les deuxièmes informations incluant un indicateur de préférence de délestage cellulaire.

3. Procédé selon la revendication 1, le serveur de politiques incluant une fonction de découverte et de sélection de réseau d'accès, ANDSF.

4. Procédé selon la revendication 1, les informations d'état étant reçues par le biais d'un message de bloc d'information système, SIB, ou d'un message de gestion des ressources radios, RRC, en provenance de la station de base.

5. Équipement utilisateur, UE, (100, 920) pour sélectionner un réseau d'accès, AN, dans un système de communication sans fil, l'UE (100, 920) comprenant :
une unité de communication sans fil (2010) configurée pour transmettre et recevoir des signaux ; et
une unité de gestion (2030) configurée pour :
gérer l'unité de communication sans fil afin de recevoir, en provenance d'un serveur de politiques (910), une politique de sélection d'AN incluant des premières informations indiquant une préférence de délestage,
gérer l'unité de communication sans fil afin de recevoir, en provenance d'une station de base, des informations d'état sur au moins un AN incluant des deuxièmes informations indiquant une préférence de délestage,
comparer les premières informations aux deuxièmes informations, et
sélectionner un AN auquel accéder sur la base d'un résultat de la comparaison.

6. UE (100, 920) selon la revendication 5, les premières informations incluant un indicateur de préférence de délestage cellulaire, et les deuxièmes informations incluant un indicateur de préférence de délestage cellulaire.

7. UE (100, 920) selon la revendication 5, le serveur de politiques incluant une fonction de découverte et de sélection de réseau d'accès, ANDSF.

8. UE (100, 920) selon la revendication 5, les informations d'état étant reçues par le biais d'un message de bloc d'information système, SIB, ou d'un message de gestion des ressources radios, RRC, en provenance de la station de base.
